# EUROPEAN PATENT APPLICATION

(11) **EP 4 806 269 A2**
(43) Date of publication of application: **16.09.2026**
(21) Application number: 26159663.9
(22) Date of filing: 19.02.2026
(51) Int. Cl.: A21C 3/06

(54) **METHOD AND DEVICE FOR ROLLING UP DOUGH PIECES**

(30) Priority: 25.02.2025 NL 2039843
(71) Applicant: Radie B.V., 4104 BC Culemborg (NL)
(72) Inventor: van Blokland, Johannes, Josephus, Antonius, 4104BC Culemborg (NL)
(74) Representative: IP Maison

(57) **Abstract**

Device for rolling up dough pieces, in particular triangular dough pieces for croissants, comprising a substantially flat first conveyor, such as a first conveyor belt, for feeding the dough pieces in a conveying direction;A first roller, rotatably mounted at a downstream end adjacent to the first conveyor, whose axial direction extends perpendicular to the conveying direction and whose mantle or lateral surface is provided with holes, in particular arranged in a regular pattern; A vacuum device, for applying a negative pressure to the first roller, for drawing the dough pieces towards the first roller through the holes; A substantially flat second conveyor, such as a second conveyor belt, mounted adjacent to the first roller, in particular parallel to and more in particular in line with the first conveyor, for feeding the dough pieces in a conveying direction; A rotatably suspended second roller for rolling up dough pieces, movable between:
• A first position, where the second roller is located at the end of the second conveyor facing the first roller; and
• A second position, where the second roller is located above the second conveyor, in particular so far that the distance between the second roller and the second conveyor is either larger than an at least partially rolled dough piece, or larger than 2 cm, more particularly larger than 3 cm, even more particularly larger than 4 cm, even more particularly larger than 5 cm, even more particularly larger than 6 cm.

## Description

The present invention relates to a method and device for rolling up dough pieces. More in particular the invention relates to a method and device for rolling up triangular dough pieces, wherein the dough pieces comprise a narrow base relative to their height.

Methods and devices for rolling up dough pieces are known in the art, also in particular for triangular dough pieces for forming croissants, amongst others by the present applicant. These devices fulfil a certain need, but it has appeared that a demand has raised for croissants made of a dough piece comprising a narrow base relative to their height. A croissant made based on such dough piece becomes rather heigh and small, compared to traditional croissants, and its manufacturing requires a specific method and device.

It is a goal of the present invention to provide a method and device that enables to fulfil the newly raised demand, and/or to provide a useful alternative to the prior art.

The invention thereto proposes a device for rolling up dough pieces, in particular triangular dough pieces for croissants, comprising a substantially flat first conveyor, such as a first conveyor belt, for feeding the dough pieces in a conveying direction; a first roller, rotatably mounted at a downstream end of the first conveyor adjacent to the first conveyor, whose axial direction extends perpendicular to the conveying direction and whose mantle or lateral surface is provided with holes, in particular arranged in a regular pattern; a vacuum device, for applying a negative pressure to the first roller, for drawing the dough pieces towards the first roller through the holes; a substantially flat second conveyor, such as a second conveyor belt, mounted adjacent to the first roller, in particular parallel to and more in particular in line with the first conveyor, for feeding the dough pieces in a conveying direction; a rotatably suspended second roller for rolling up dough pieces, movable between: a first position, where the second roller is located at the end of the second conveyor facing the first roller; and a second position, where the second roller is located above the second conveyor, in particular so far that the distance between the second roller and the second conveyor is either larger than an at least partially rolled dough piece, or larger than 2 cm, more particularly larger than 3 cm, even more particularly larger than 4 cm, even more particularly larger than 5 cm, even more particularly larger than 6 cm.

In order to enable the vacuum device, which may comprise a pump or the like, to apply a negative pressure to the first roller, for drawing the dough pieces towards the first roller through the holes, said first roller may be at least partially hollow, with channels leading from an interface for the vacuum device to the holes in the mantle or lateral surface. It is also thinkable that the first roller is entirely hollow. In any case, the vacuum device is to create a vacuum inside the first roller. Throughout this application, where a vacuum is mentioned, any pressure lower than the ambient pressure outside the first roller is to be understood. This ensures that the dough pieces are attracted to the surface of the first roller and follow the outside thereof when conveyed.

The second roller serves to flip the leading edge of the dough pieces and to start the rolling process. From then it remains against the outer surface of the dough piece that is actually rolled up. This may be, but does not have to be until the rolling is finished and said dough piece is released, to the second conveyor. Then, a subsequent dough piece can be rolled. As the dimensions of the dough piece increase while rolling, the second roller is lifted during the rolling process.

The downstream end of the second conveyor, which is at the side facing the first roller, may comprise a sharp edge, such as a tapered edge, with an increasing height in the conveying direction. The sharp or tapered edge may be arranged such that the second conveyor surface Is under an angle of 30 to 90 degrees with the surface of the first roller its adjacent to. For that purpose, it may be looped about a tapered or arrowshaped support, which may be formed by a single piece or by for instance multiple guides causing a sharp curve.

The second conveyor may comprise a ribbed pattern as well, in order to lift a leading edge of a dough piece to start rolling of said dough piece.

A rolling mat may be located above the second conveyor, downstream in the conveying direction. In case the (partly) rolled up dough piece is released by (lifting the) second roller, this mat may serve to finish the rolling of the dough piece. In any case, such mat ensures that rolled up dough pieces remain rolled up and may be used to (com)press them after rolling to fixate the tip or slot of the rolled up dough piece. It may also be used to prevent the dough pieces from rolling over the second conveyor. Rolling may be undesired because it disturbs the position and/or orientation of the dough pieces on the second roller. This position and/or orientation may be relevant for subsequent dough processing steps, or for a baking or packaging stage.

The second roller may be provided with a ribbed pattern. Such ribbed pattern may increase the grip of the second roller on the leading edge (and the remainder) of the dough pieces and may in particular assist in flipping them.

The second roller may be provided with slots for belts to drive said roller, in particular slots provided in the mantle or lateral surface or in pulleys provided at the end of the roller. This allows to drive the roller with a drive mounted at a distance of the roller, which has - beside hygienic considerations - the advantage that the weight of the drive does not influence the pressure the second roller exerts on the dough pieces.

The slots or pulleys may be dimensioned such that the belts, at least on a side facing the dough pieces during use, are recessed relative to the mantle or lateral surface and/or ribs provided thereon, so as not to touch the dough.

The second roller doesn't necessarily rotate at the same speed as the first (vacuum) roller.

If the second roller rotates too slowly, the "rolling chamber", being a space between the first and the second roller, may fill with dough.

If the second roller rotates too quickly, the partially rolled dough piece may be transported out of this "rolling chamber" in an uncontrolled manner.

Best experience is obtained with the second roller rotating 7% faster than the first (vacuum) roller. Depending on specific circumstances,
The device according to the invention may comprise a control device configured to drive the second roller in a direction in which the side of the mantle or lateral surface facing the second conveyor moves opposite to the conveying direction. The control device may be configured to drive the second roller at a peripheral speed opposite in direction, but equal in magnitude to the speed at which the dough pieces are supplied in the conveying direction. This speed assists in flipping the leading edge of the dough piece for starting the rolling, but ensures that there is no slipping between the dough piece and the roller, therewith avoiding damage of the dough surface due to sheering or tearing forces.

In a device according to the invention, a control device may be configured to bring the second roller to the first position before a dough piece arrives, and to move the second roller from the first to the second position during the rolling process before a dough piece has been fully rolled, or to move the second roller from the first to the second position during the rolling process before a dough piece has been fully supplied to the second roller.

The device according to the invention may be used for rolling up dough pieces that are triangular, in particular with a narrow base relative to the height, in particular a base no wider than half the height, wherein the triangles are transported with their bases leading and perpendicular to the conveying direction.

The second roller may be configured to press under gravity onto the second conveyor and/or a dough piece located thereon.

The first conveyor may be configured to feed multiple parallel rows of dough pieces, wherein the first roller extends over a width of at least the width of the rows of dough pieces or wherein there is a first roller per row of dough pieces, and wherein for each row of dough pieces there is a second roller that can be moved independently from a first to a second position.

The present invention also relates to a method for rolling up an dough pieces, in particular with a device according to any of the preceding claims, and in particular triangular dough pieces for croissants, comprising the steps of partially rolling up dough pieces by passing them between a conveyor and a roller whose mantle or lateral surface rotates in the opposite direction to the conveyor's conveying direction; and subsequently, completely rolling up the dough pieces by rolling the partially rolled dough pieces under a rolling mat. Herein, the dough pieces may comprise a narrow base relative to their height, in particular a base no wider than half the height, wherein the triangles are transported with their bases leading and perpendicular to the conveying direction.

The invention will now be elucidated into more detail, with reference to the following figures. Herein:
- Figure 1 shows a conveyor with dough pieces fed to a device according to the present invention;
- Figure 2 shows detail of a device according to the present invention in a first stage;
- Figure 3 shows detail of a device according to the present invention in a second stage;
- Figure 4 shows detail of a device according to the present invention in a third stage;
- Figure 5 shows detail of a device according to the present invention in a fourth stage;
- Figure 6 shows detail of a device according to the present invention in a fifth stage;
- Figure 7 shows detail of a device according to the present invention in a sixth stage;
- Figure 8 shows a finished dough product by a device according to the present invention; and
- Figure 9 shows a detail of a device according to the present invention.

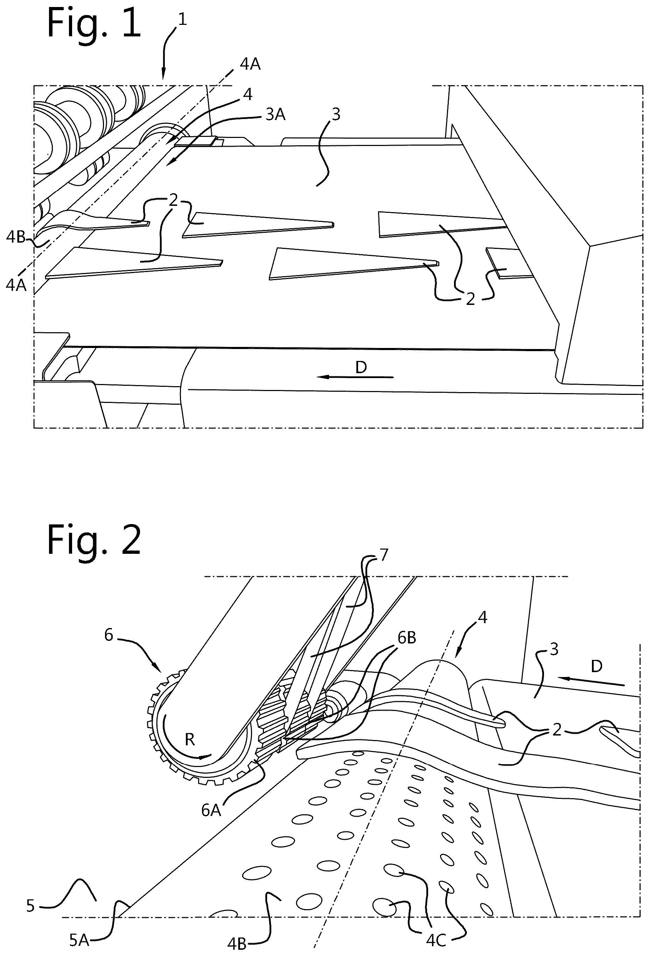

Figure 1 shows a device 1 for rolling triangular dough pieces 2 for croissants, comprising a substantially flat first conveyor belt 3, for feeding the dough pieces in a conveying direction D, toward a first roller 4, rotatably mounted at a downstream end 3A of the first conveyor adjacent to the conveyor 3, whose axial direction 4A extends perpendicular to the conveying direction D and whose mantle or lateral surface 4B is provided with holes 4C, arranged in a regular pattern.

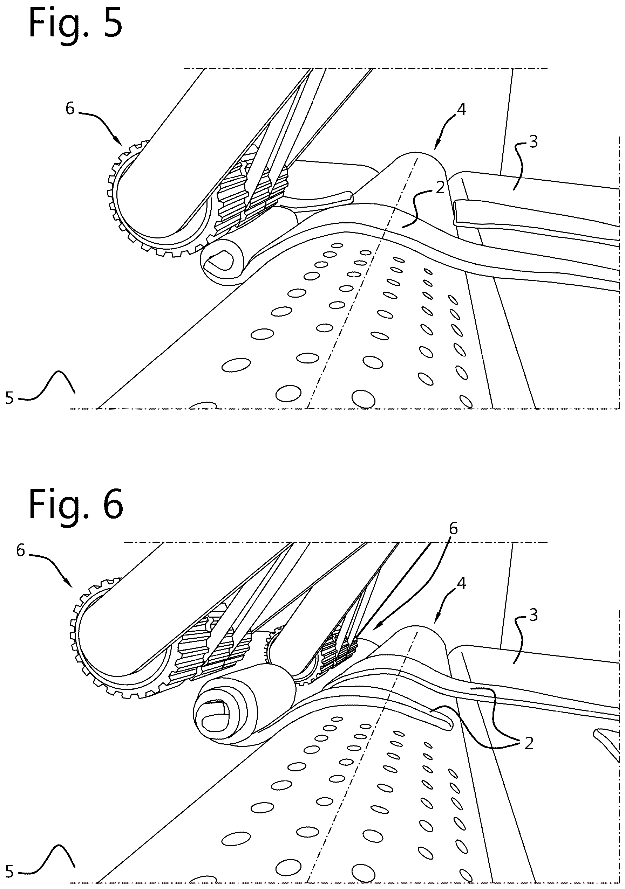

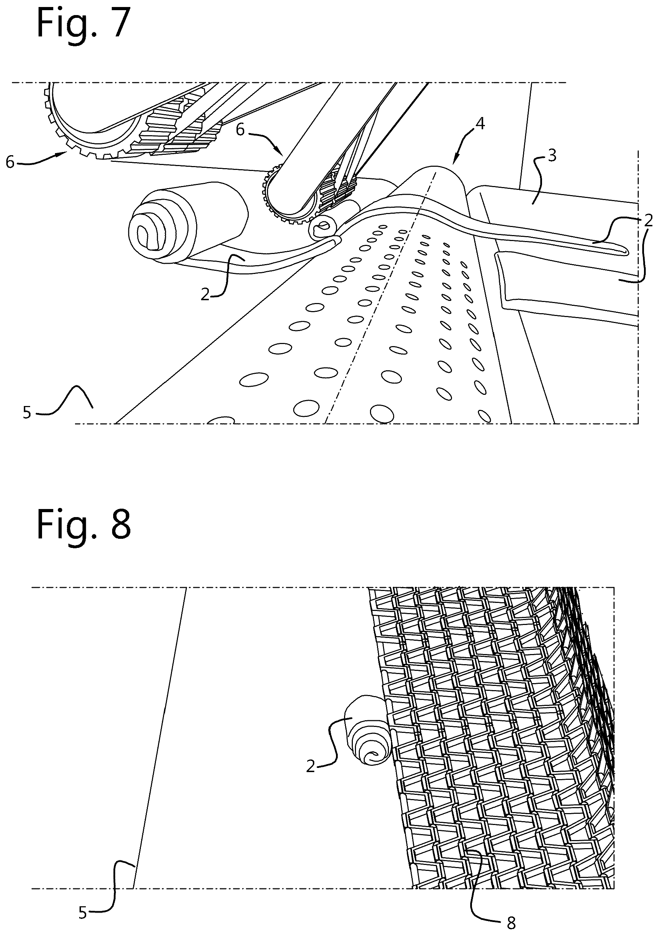

Figure 2 shows the device 1 from figure 1 in more detail. The device 1 comprises a vacuum device (not visible), for applying a negative pressure to the first roller 4, for drawing the dough pieces 2 towards the first roller 4 through the holes 4C. In this figure, a substantially flat second conveyor belt 5 is visible, mounted adjacent to the first roller 4, in particular parallel to and more in particular in line with the first conveyor 3, for feeding the dough pieces 2 in a conveying direction. The device further comprises a rotatably suspended second roller 6 for rolling up dough pieces 2, movable between a first position (shown in this figure) where the second roller 6 is located at the end 5A of the second conveyor 5 facing the first roller 4; and a second position (shown in figures 5, 6 and 7), to be described later, where the second roller is located above the second conveyor 5, in particular so far that the distance between the second roller and the second conveyor is either larger than an at least partially rolled dough piece (visible in figure 7). As can be seen in figure 2, the second roller 6 is provided with a ribbed pattern 6A. The second roller 6 is further provided with slots 6B for belts 7 to drive the roller 6, in particular slots 6B provided in the mantle or lateral surface of the roller 6.

The slots 6A are dimensioned such that the belts 7, at least on a side facing the dough pieces 2 during use, are recessed relative to the mantle or lateral surface and/or ribs 6A provided thereon, so as not to touch the dough 2.

The second roller may be driven in a direction R in which the side of the mantle or lateral surface facing the second conveyor moves opposite to the conveying direction D. A control device (not shown) is configured to drive the second roller 6 at a peripheral speed opposite in direction, but equal in magnitude to the speed at which the dough pieces 2 are supplied in the conveying direction D.

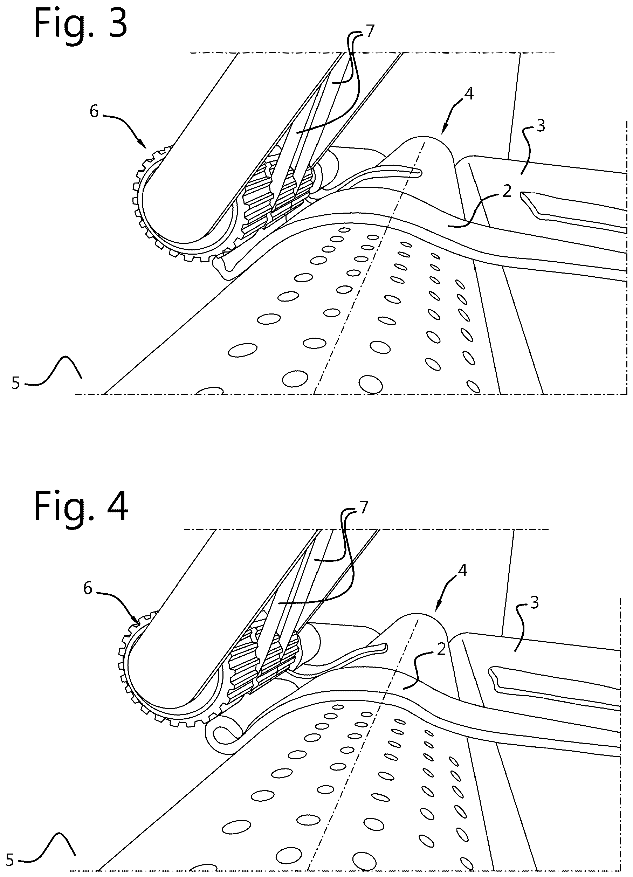

Figure 3 shows the moment when a leading edge of a dough piece 2 is flipped by the second roller 6. As the second roller is driven in opposite direction R of the conveying direction D, it keeps on rolling the dough piece 3.

Figure 4 shows the moment where the leading edge of a dough piece 2 has made a complete turn.

Figures 5 and 6 show the dough piece 2 in subsequent rolling stages of being rolled up. As the dimensions of the dough piece increase, the second roller 6 moves from its first position toward its second condition, but in the stages shown, the second roller 6 is located above the second conveyor 5, but not yet so far that the distance between the second roller and the second conveyor is either larger than an at least partially rolled dough piece, so the dough piece can't pass yet ( to escape from the roiling process).

Figure 7 does show a stage wherein A second position, where the second roller 6 is located above the second conveyor 5, so far that the distance between the second roller 6 and the second conveyor 5 is either larger than an at least partially rolled dough piece. This distance may for instance be , larger than 2 cm, more particularly larger than 3 cm, even more particularly larger than 4 cm, even more particularly larger than 5 cm, even more particularly larger than 6 cm. After this step, the control device is configured to bring the second roller 6 to the first position before a dough piece 2 arrives, and to move the second roller 6 from the first to the second position during the rolling process before a dough piece 2 has been fully rolled, or to move the second roller 6 from the first to the second position during the rolling process before a dough piece 2 has been fully supplied to the second roller 6.

As visible in all figures, the first conveyor 3 is configured to feed multiple parallel rows of dough pieces 2, wherein the first roller 4 extends over a width of at least the width of the rows of dough pieces or wherein there is a first roller per row of dough pieces, and wherein for each row of dough pieces 2 there is a second roller 6 that can be moved independently from a first to a second position.

Figure 8 shows a rolling mat 8, located above the second conveyor 5, downstream in the conveying direction.

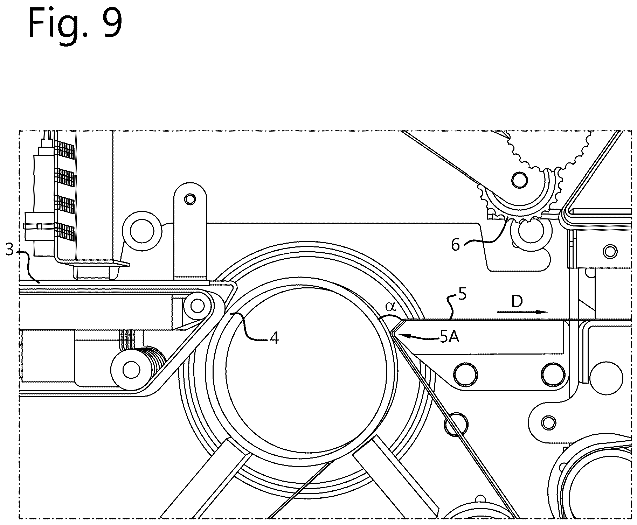

Figure 9 shows that the downstream end 5A of the second conveyor 5, which is at the side facing the first roller comprises a sharp edge, in this case a tapered edge, with an increasing height in the conveying direction or transport D. The ramp may be arranged such that the second conveyor surface Is under an angle *alpha* of 30 to 90 degrees with the surface of the first roller its adjacent to. For that purpose, it may be looped about a tapered or arrowshaped support 5A, which may be formed by a single piece or by for instance multiple guides such as small rollers, causing a sharp curve.

The second conveyor may comprise a ribbed pattern as well, in order to lift a leading edge of a dough piece to start rolling of said dough piece.

## Claims

1. Device for rolling up dough pieces, in particular triangular dough pieces for croissants, comprising:
- A substantially flat first conveyor, such as a first conveyor belt, for feeding the dough pieces in a conveying direction;
- A first roller, rotatably mounted at a downstream end adjacent to the first conveyor, whose axial direction extends perpendicular to the conveying direction and whose mantle or lateral surface is provided with holes, in particular arranged in a regular pattern;
- A vacuum device, for applying a negative pressure to the first roller, for drawing the dough pieces towards the first roller through the holes;
- A substantially flat second conveyor, such as a second conveyor belt, mounted adjacent to the first roller, in particular parallel to and more in particular in line with the first conveyor, for feeding the dough pieces in a conveying direction;
- A rotatably suspended second roller for rolling up dough pieces, movable between:
• A first position, where the second roller is located at the end of the second conveyor facing the first roller; and
• A second position, where the second roller is located above the second conveyor, in particular so far that the distance between the second roller and the second conveyor is either larger than an at least partially rolled dough piece, or larger than 2 cm, more particularly larger than 3 cm, even more particularly larger than 4 cm, even more particularly larger than 5 cm, even more particularly larger than 6 cm.

2. Device according to claim 1, wherein a rolling mat is located above the second conveyor, downstream in the conveying direction.

3. Device according to claim 1 or 2, wherein the second roller is provided with a ribbed pattern.

4. Device according to any of the preceding claims, wherein the second roller is provided with slots for belts to drive the roller, in particular slots provided in the mantle or lateral surface or in pulleys provided at the end of the roller.

5. Device according to claim 4, wherein the slots or pulleys are dimensioned such that the belts, at least on a side facing the dough pieces during use, are recessed relative to the mantle or lateral surface and/or ribs provided thereon, so as not to touch the dough.

6. Device according to any of the preceding claims, comprising a control device configured to drive the second roller in a direction in which the side of the mantle or lateral surface facing the second conveyor moves opposite to the conveying direction.

7. Device according to claim 6, wherein the control device is configured to drive the second roller at a peripheral speed opposite in direction, but equal in magnitude to the speed at which the dough pieces are supplied in the conveying direction.

8. Device according to claim 7, wherein the control device is configured to bring the second roller to the first position before a dough piece arrives, and to move the second roller from the first to the second position during the rolling process before a dough piece has been fully rolled, or to move the second roller from the first to the second position during the rolling process before a dough piece has been fully supplied to the second roller.

9. Device according to any of claims 6-8, wherein the control device is configured to drive the second roller with 100-125% of the speed of the first roller.

10. Device according to any of the preceding claims, wherein in use, the dough pieces are triangular, in particular with a narrow base relative to the height, in particular a base no wider than half the height, wherein the triangles are transported with their bases leading and perpendicular to the conveying direction.

11. Device according to any of the preceding claims, wherein the second roller is configured to press under gravity onto the second conveyor and/or a dough piece located thereon.

12. Device according to any of the preceding claims, wherein the first conveyor is configured to feed multiple parallel rows of dough pieces, wherein the first roller extends over a width of at least the width of the rows of dough pieces or wherein there is a first roller per row of dough pieces, and wherein for each row of dough pieces there is a second roller that can be moved independently from a first to a second position.

13. Device according to any of the preceding claims, wherein the downstream end of the second conveyor, which is at the side facing the first conveyor, comprises a tapered edge, with an increasing height in the conveying direction, in particular arranged such that the second conveyor surface Is under an angle of 30 to 90 degrees with the surface of the first roller its adjacent to.

14. Device according to any of the preceding claims, wherein the second conveyor comprises a ribbed pattern, in order to lift a leading edge of a dough piece to start rolling of said dough piece.

15. Method for rolling up an dough pieces, in particular with a device according to any of the preceding claims, and in particular triangular dough pieces for croissants, comprising:
- Partially rolling up dough pieces by passing them between a conveyor and a roller whose mantle or lateral surface rotates in the opposite direction to the conveyor's conveying direction; and
- Subsequently, completely rolling up the dough pieces by rolling the partially rolled dough pieces under a rolling mat.

16. Method according to claim 15, wherein the dough pieces comprise a narrow base relative to their height, in particular a base no wider than half the height, wherein the triangles are transported with their bases leading and perpendicular to the conveying direction.
